Europäisches Patentamt

(19) European Patent Office

Office européen des brevets

(11) Publication number: **0 295 569 B1**

# EUROPEAN PATENT SPECIFICATION

(12)

(45) Date of publication of patent specification :
11.09.91 Bulletin 91/37

(51) Int. Cl.⁵ : **B63H 21/28, B63H 23/04, F16H 3/14**

(21) Application number : **88109167.2**

(22) Date of filing : **09.06.88**

(54) Reversing mechanism for an outboard propulsion power leg.

(30) Priority : **15.06.87 IT 4161687**

(43) Date of publication of application :
**21.12.88 Bulletin 88/51**

(45) Publication of the grant of the patent :
**11.09.91 Bulletin 91/37**

(84) Designated Contracting States :
**BE DE FR GB SE**

(56) References cited :
**FR-A- 1 365 824**
**FR-A- 1 487 430**
**GB-A- 854 786**
**US-A- 2 688 298**
**US-A- 3 556 041**
**US-A- 3 823 801**

(73) Proprietor : **M.P.M. MECCANICA PADANA MONTEVERDE S.p.A.**
**Via dell'Industria, 46/48**
**I-35100 Padova (IT)**

(72) Inventor : **De Stefani, Vincenzo**
**Via Damiano Chiesa, 12**
**I-35100 Padova (IT)**
Inventor : **Zorzi, Giovanni**
**Via Roma 67**
**I-35010 S. Giorgio di Pertiche (Padova) (IT)**

(74) Representative : **Modiano, Guido et al**
**MODIANO, JOSIF, PISANTY & STAUB**
**Modiano & Associati Via Meravigli, 16**
**I-20123 Milano (IT)**

## Description

The present invention relates to a reversing mechanism for an outboard propulsion power leg.

Various types of motion reversers are known, used in inboard-engine boats, among which one may mention those not integrated in the power leg for the transmission of the motion to the propeller shaft and those integrated therein.

In both cases the reversers are constituted by mechanical gearshifts with plate type clutches actuated by levers and springs.

These reversers require, for their actuation, considerable forces which affect the entire mechanism, with considerable sharp movements and shocks.

Despite this, the pressures exerted by the springs on the disks are not high and cannot be increased beyond certain limits.

To achieve the same engagement force it is necessary to use large-diameter disks to increase the contact surface area.

Due to this reason the outer dimensions of reversers may be large, thereby prejudicing their use.

The aim of the present invention is to eliminate the disadvantages described above in known types by providing a reversing mechanism for an out board power leg, of the type wherein the reversing devices are contained in the power leg itself, which is easily manoeuvrable and characterized by a gradual shock-free engagement.

Within the proposed aim, an important object is to provide a reverser with clutches engaged by high pressures.

Another object is to provide a reverser having compact dimensions.

Not least object is to achieve low costs obtainable with ordinary systems.

This aim, as well as these and other objects, are achieved by a reversing mechanism for an outboard propulsion power leg, of the type wherein the reversing devices are contained in the power leg itself see US-A-3556041, characterized in that it comprises two clutches drawing the motion directly from the drive shaft and each acting alternately on a driven gear which actuates the propeller shaft, each of said clutches having a hydraulic engagement piston, said hydraulic pistons being fed by a pump keyed on the drive shaft and contained in the power leg.

Advantageously, the power leg comprises a hydraulic circuit connecting said pump to said pistons through a distributor, said hydraulic circuit comprising means for the lubrication of the entire power leg.

Further characteristics and advantages of the invention will become apparent from the description of a preferred but not exclusive embodiment of the aft foot reverser, illustrated only by way of non-limitative example in the accompanying drawings, wherein :

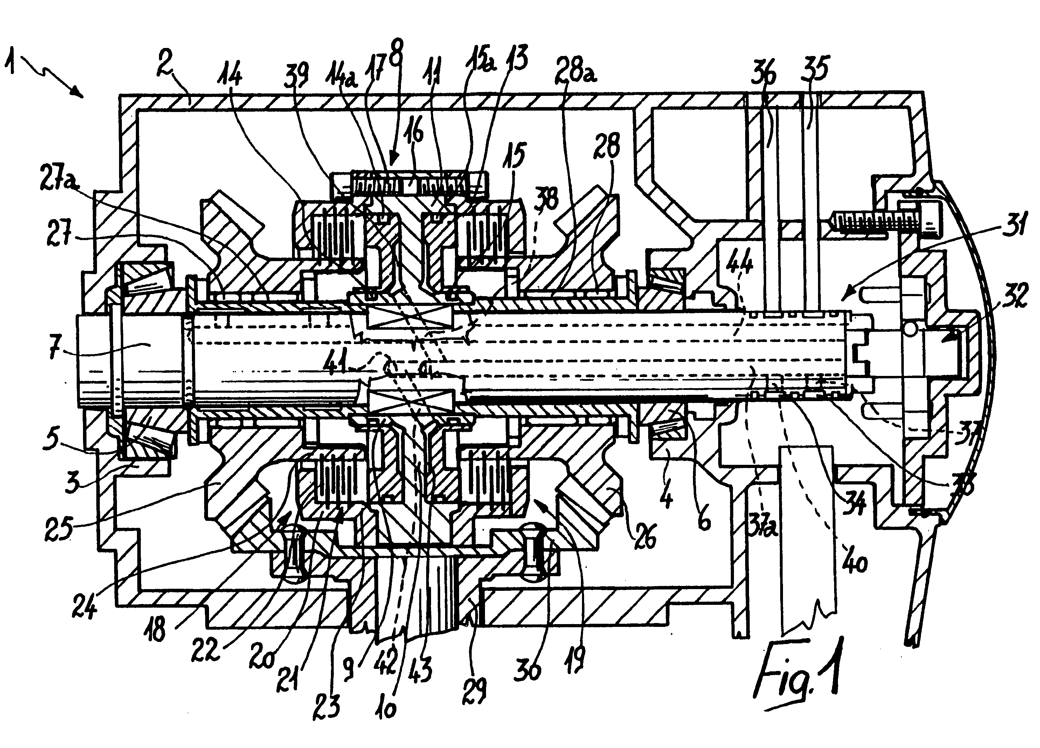

figure 1 is a longitudinal sectional view of the power leg portion which contains the reverser.

With reference to the above described figure, the power leg reverser is generally indicated by the reference numeral 1, and comprises a body 2 containing two seats with coinciding axes, respectively 3 and 4, for bearings 5 and 6 for supporting a drive shaft 7.

A disk-like element 8 is keyed on said drive shaft 7 between said bearings 5 and 6, by means of keys 9 and 10.

The disk-like element 8 is formed by a cylindrical hub 9 which extends externally and symmetrically with respect to its transverse axis into a disk 10 bearing an outer annular crown 11 which is also symmetrical with respect to the transverse axis.

The disk-like element 8 defines, between the outer surfaces of the hub 9 and the inner surfaces of the crown 11, two annular seats for two mutually symmetrical hydraulic pistons, respectively indicated at 12 and 13.

The seats 14, 14a, 15 and 15a for sealing rings are provided on the outer surfaces of the hub and of the pistons.

The outer annular crown 11 has symmetrically arranged longitudinal threaded holes 16.

Said holes 16 are seats for screws 17 which couple the disk-like element 8 to two mutually symmetrical plate type clutches, respectively 18 and 19.

Each plate type clutch comprises an essentially cylindrical support 20, internally axially perforated and inserted on said drive shaft 7, in which a cylindrical seat 21 is provided for a series of disks 22 arranged mutually facing each other and being slideably associated, one by one, with the outer grooved cylindrical surface 23 of said seat 21 or with a crown 24, again with grooved profile, arranged inside said essentially cylindrical support 20.

The outer diameter of each of said cylindrical seats 21 is equal to the outer diameter of those containing the pistons 12 and 13.

On the surface opposite to said disc 10, the pistons 12 and 13 are configured so as to not interfere with each of said crowns 24.

The crowns 24 are each welded to a conical toothed wheel.

The two conical toothed wheels, respectively indicated at 25 and 26, are arranged symmetrically to each other and freely rotatable on the drive shaft 7, and are coupled to the drive shaft by means of roller bearings 27, 27a and 28, 28a.

A driven shaft or propeller shaft 29, supported on said body 2 by bearings not visible in the figure, is arranged on the transverse axis of said disk-like element 8, below said element.

A conical toothed wheel or driven gear 30 is keyed on said driven shaft 29 and simultaneously meshes with said toothed wheels 25 and 26.

Said drive shaft 7 extends with one of its free ends 31 to couple to an oil pump 32, connected at its delivery to a conventional distributor of the type used in hydraulic circuits, to selectively connect different branches of the circuit.

Said free end 31 has two annular recesses, respectively 33 and 34, which communicate with the previously mentioned distributor by means of cylindrical ducts, respectively 35 and 36.

The annular recess 33 also communicates, by means of a radial hole 37, with a longitudinal hole formed in said drive shaft 7, which hole is in turn connected, by means of a transverse hole 38, which also traverses the hub 9, to the crown of the piston 12 on which a flattened annular chamber 39 is provided.

The annular recess 34 is in turn connected, by means of a radial hole 40, a longitudinal hole 41 and a transverse hole 42, to the crown of the piston 13, having formed thereon a flattened annular chamber 43, similar to the chamber 39 of the piston 12.

Another hole 44, which longitudinally transverses the drive shaft 7, communicates, by means of radial holes, all of the bearings and the parts of the reverser 1, to be lubricated to the intake of the oil pump.

The operation of the reverser is as follows : the rotation of the drive shaft 7 causes actuation of the pump 32, which sends pressurized oil to the distributor.

By means of the controls provided on the distributor itself it is possible to cause pressurized oil to flow through e.g., the duct 35 and the annular recess 33, to the longitudinal hole 37a and to the chamber provided on the crown of the piston 12.

The pressurized oil pushes the piston 12 against the disks of the clutch 18, engaging it and causing coupling between the disk-like element 8 and the conical toothed wheel 25 which is thus caused to rotate together with the drive shaft 7.

The conical toothed wheel 25 moves, in turn, the wheel 30 of the driven shaft 29.

To reverse the motion of the driven shaft 29 it is now sufficient to divert the delivery of the pressurized oil of the pump 32, by means of the distributor, towards the duct 36 and then through the longitudinal hole 41 to the annular chamber of the crown of the piston 13 which, by engaging the clutch 19, associates the disk-like element 8 with the toothed wheel 26.

The clutch 18, being no longer subject to the pressure of the piston 12, disengages and leaves the toothed wheel 25 free to freely rotate on the drive shaft 7.

The entire mechanism is in an oil bath, so the connection of the intake of the pump 32 to all of the moving parts through the hole 44 allows the circulation of said oil with excellent lubricating action.

From what has been described it is apparent that the invention achieves the intended aim and objects, since the hydraulic actuation is more gradual, with a consequently softer actuation ; furthermore the pressures usable for the engagement of the clutches, besides being higher, are uniformly distributed on the disks.

This allows the use of smaller clutches, with the consequent possibility of providing a more compact aft foot.

The same oil used for actuation also serves for lubricating the moving parts.

The manual efforts required for actuating the reverser are minimized if not actually eliminated.

In practice, the materials employed, as well as the dimensions, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

**Claims**

1. Reversing mechanism (1) for an outboard propulsion power leg, of the type wherein the reversing devices are contained in the power leg itself, characterized in that it comprises at least two clutches (18, 19) drawing the motion directly from a drive shaft (7) and each acting alternately on a driven gear (30) which actuates the propeller shaft (29), each of said clutches (18, 19) having a hydraulic engagement piston (12, 13), said hydraulic pistons (12, 13) being fed by a pump (32) keyed on the drive shaft (7) and contained in the body (2) of the power leg.

2. Aft foot reverser, according to claim 1, characterized in that is comprises a hydraulic circuit connecting said pump (32) to said pistons (12, 13) through a distributor, said hydraulic circuit comprising means (44) for lubricating the entire aft foot.

3. Reverser, according to claims 1 and 2, characterized in that it comprises, formed on said body (2), seats (3, 4) with coinciding axes for the bearings (5, 6) supporting said drive shaft (7), a disk-lik element (8), formed by a cylindrical hub (9) which extends externally and symmetrically with respect to its transverse axis into a disk (10) bearing an outer annular crown (11) which is also symmetrical with respect to said transverse axis, and keyed on said drive shaft (7) between said bearings (5, 6).

4. Reverser, according to one or more of the preceding claims, characterized in that said disk-like element (8) forms, between the outer surfaces of the hub (9) and the inner surfaces of the outer annular crown (11), two annular seats for said hydraulic pistons (12, 13), said pistons (12, 13) being arranged symmetrically to each other, the outer cylindrical surfaces of said hub (9) and said pistons (12, 13) having seats for sealing rings.

5. Reverser, according to one or more of the preceding claims, characterized in that said outer annular crown (11) of said disk-like element (8) has symmetrically arranged longitudinal holes, said holes (16) defining seats for screws (17) for coupling to said clutches (18, 19).

6. Reverser, according to one or more of the preceding claims, characterized in that said clutches (18, 19) are arranged symmetrically to each other and comprises an essentially cylindrical support (20), internally axially perforated for insertion on said drive shaft (7), a cylindrical seat (21) being provided in said support (20) for a series of disks (22) arranged facing each other and one by one slideably associated with the outer grooved surface (23) of said seat (21) or with a grooved crown (24) arranged internally to said support (20) and rotoidally associated with said drive shaft (7).

7. Reverser, according to one or more of the preceding claims, characterized in that said grooved crown (24) of each of said clutches (18, 19) is connected to a conical toothed wheel (25, 26) freely rotatable on said drive shaft (7) and coupled thereto by means of roller bearings (27, 27a, 28, 28a).

8. Reverser, according to one or more of the preceding claims, characterized in that said driven shaft (29) supported on said body (2) by bearings is arranged on the transverse axis of said disk-like element (8), below said element (8), said driven shaft (29) being keyed to a conical toothed wheel (30) simultaneously meshing with said toothed wheels (25, 26) associated with said plate type clutches (18, 19).

9. Reverser, according to one or more of the preceding claims, characterized in that said drive shaft (7) extends with one of its free ends (31) to couple to an oil pump (32) having a delivery connected to a distributor, said free end (31) having two annular recesses (33, 34) connected, by means of cylindrical ducts (35, 36), to said distributor.

10. Reverser, according to one or more of the preceding claims, characterized in that each of said annular recesses (33, 34) is connected, by means of a radial hole (37, 40), a longitudinal hole provided on said drive shaft (7) and a transverse hole (38, 42) which traverses the hub (9), to the crown of one of said pistons (12, 13) on which a flattened annular chamber (39, 43) is provided.

11. Reverser, according to one or more of the preceding claims, characterized in that said drive shaft (7) is longitudinally traversed by another hole (44) which, by means of radial holes, connects all the bearings and the parts of the reverser to be lubricated to the intake of the oil pump (32).

**Patentansprüche**

1. Umsteuereinrichtung (1) für eine Außenbordantriebsvorrichtung des Typs, bei dem die Umsteuervorrichtungen in der Antriebsvorrichtung selbst enthalten sind, dadurch gekennzeichnet, daß sie mindestens zwei Kupplungen (18, 19) aufweist, die die Bewegung direkt von einer Antriebswelle (7) abnehmen und von denen jede abwechselnd auf ein angetriebenes Zahnrad (30) wirkt, welches die Schraubenwelle (29) bewegt, wobei jede dieser Kupplungen (18, 19) einen hydraulischen Eingriffskolben (12, 13) hat, wobei diese Hydraulikkolben (12, 13) durch eine Pumpe (32) versorgt werden, die auf der Antriebswelle (7) verkeilt ist und im Gehäuse (2) der Antriebsvorrichtung enthalten ist.

2. Umsteuereinrichtung nach Anspruch 1, dadurch gekennzeichnet, daß sie einen hydraulischen Kreislauf aufweist, der die Pumpe (32) mit den Kolben (12, 13) durch einen Verteiler verbindet, wobei dieser hydraulische Kreislauf Einrichtungen (44) zum Schmieren der gesamten Antriebsvorrichtung aufweist.

3. Umsteuereinrichtung nach Anspruch 1 oder 2, dadurch gekennzeichnet, daß sie an dem Gehäuse (2) geformte Sitze (3, 4) mit zusammenfallenden Achsen für die Lager (5, 6), die die Antriebswelle (7) stützen, und ein scheibenartiges Teil (8) aufweist, das von einer zylindrischen Nabe (9) gebildet wird, die sich nach außen und symmetrisch in bezug zu ihrer Querachse in einer Scheibe (10) fortsetzt, die einen äußeren ringförmigen Kranz (11) trägt, der ebenfalls symmetrisch in bezug zu dieser Querachse ist und auf der Antriebswelle (7) zwischen den Lagern (5, 6) verkeilt ist.

4. Umsteuereinrichtung nach einem oder mehreren der vorhergehenden Ansprüche, dadurch gekennzeichnet, daß dieses scheibenartige Teil (8) zwischen den äußeren Oberflächen der Nabe (9) und den inneren Oberflächen des äußeren ringförmigen Kranzes (11) zwei ringförmige Sitze für die hydraulischen Kolben (12,, 13) bildet, wobei diese Kolben (12, 13) symmetrisch zueinander angeordnet sind, wobei die äußeren zylindrischen Oberflächen der Nabe (9) und die Kolben (12, 13) Sitze für Dichtungsringe haben.

5. Umsteuereinrichtung nach einem oder mehreren der vorhergehenden Ansprüche, dadurch gekennzeichnet, daß dieser äußere ringförmige Kranz (11) dieses scheibenartigen Teils (8) symmetrisch angeordnete Längsbohrungen hat, wobei diese Bohrungen (16) Sitze für Schrauben (17) zum Verbinden mit den Kupplungen (18, 19) bilden.

6. Umsteuereinrichtung nach einem oder mehreren der vorhergehenden Ansprüche, dadurch gekennzeichnet, daß diese Kupplungen (18, 19) symmetrisch zueinander angeordnet sind und eine im wesentlichen zylindrische Stütze (20) aufweisen, die innen axial zum Einführen auf die Antriebswelle (7) gelocht ist, wobei ein zylindrischer Sitz (21) in dieser Stütze (20) für eine Reihe an Scheiben (22) vorgesehen ist, die sich gegenüberstehend angeordnet und, gleitend, mit der äußeren gerillten Oberfläche (23) des Sitzes (21) oder mit einem gerillten Kranz (24) verbunden sind, der innerhalb dieser Stütze (20) angeordnet ist und drehbar mit der Antriebswelle (7) verbunden ist.

7. Umsteuereinrichtung nach einem oder mehreren der vorhergehenden Ansprüche, dadurch gekennzeichnet, daß dieser gerillte Kranz (24) von jeder dieser Kupplungen (18, 19) mit einem konischen Zahnrad (25, 26) verbunden ist, das auf der Antriebswelle (7) frei drehbar ist und damit mittels Wälzlagern (27, 27a, 28, 28a) verbunden ist.

8. Umsteuereinrichtung nach einem oder mehreren der vorhergehenden Ansprüche, dadurch gekennzeichnet, daß diese angetriebene Welle (29), die an dem Gehäuse (2) durch Lager gestützt wird, auf der Querachse des scheibenartigen Teils (8) unterhalb dieses Teils (8) angeordnet ist, wobei die angetriebene Welle (29) mit einem konischen Zahnrad (30) verkeilt ist, das gleichzeitig in die mit den plattenartigen Kupplungen (18, 19) verbundenen Zahnräder (25, 26) eingreift.

9. Umsteuereinrichtung nach einem oder mehreren der vorhergehenden Ansprüche, dadurch gekennzeichnet, daß die Antriebswelle (7) sich mit einem ihrer freien Enden (31) zum Verbinden mit einer Ölpumpe (32) erstreckt, die einen Auslaß hat, der mit einem Verteiler verbunden ist, wobei dieses freie Ende (31) zwei ringförmige Vertiefungen (33, 34) hat, die durch zylindrische Leitungskanäle (35, 36) mit dem Verteiler verbunden sind.

10. Umsteuereinrichtung nach einem oder mehreren der vorhergehenden Ansprüche, dadurch gekennzeichnet, daß jede dieser ringförmigen Vertiefungen (33, 34) durch eine radiale Bohrung (37, 40), eine Längsbohrung, die an der Antriebswelle (7) vorgesehen ist, und eine Querbohrung (38, 42), die die Nabe (9) durchquert, mit dem Kranz von einem der Kolben (12, 13) verbunden ist, an dem eine abgeflachte ringförmige Kammer (39, 43) vorgesehen ist.

11. Umsteuereinrichtung nach einem oder mehreren der vorhergehenden Ansprüche, dadurch gekennzeichnet, daß die Antriebswelle (7) der Länge nach von einer anderen Bohrung (44) durchquert wird, die mittels radialer Bohrungen alle Lager und die zu schmierenden Teile der Umsteuereinrichtung mit dem Einlaß der Ölpumpe (32) verbindet.

## Revendications

1. Mécanisme d'inversion (1) pour un élément de propulsion d'un hors-bord, du type dans lequel les dispositifs d'inversion sont contenus dans l'élément de propulsion lui-même, caractérisé en ce qu'il comporte au moins deux embrayages (18, 19) tirant leur mouvement directement d'un arbre d'entraînement (7) et chacun agissant alternativement sur un pignon mené (30) qui actionne l'arbre d'hélice (29), chacun desdits embrayages (18, 19) possédant un piston d'engagement hydraulique (12, 13), lesdits pistons hydrauliques (12, 13) étant alimentés par une pompe (32) calée sur l'arbre d'entraînement (7) et contenue dans le corps (2) de l'élément de propulsion.

2. Mécanisme d'inversion d'élément de propulsion arrière selon la revendication 1, caractérisé en ce qu'il comporte un circuit hydraulique reliant ladite pompe (32) auxdits pistons (12, 13) par l'intermédiaire d'un distributeur, ledit circuit hydraulique comportant des moyens (44) afin de lubrifier la totalité de l'élément de propulsion.

3. Mécanisme d'inversion selon les revendications 1 et 2, caractérisé en ce qu'il comporte, formés sur ledit corps (2), des sièges (3, 4) coaxiaux pour les paliers (5, 6) supportant ledit arbre d'entraînement (7), un élément (8) en forme de disque, formé par un moyeu cylindrique (9) s'étendant extérieurement et symétriquement par rapport à son axe transversal dans un disque (10) portant une couronne annulaire extérieure (11) qui est également symétrique par rapport audit axe transversal, et calé sur ledit arbre d'entraînement (7) entre lesdits paliers (5, 6).

4. Mécanisme d'inversion selon l'une quelconque des revendications précédentes, caractérisé en ce que ledit élément (8) en forme de disque constitue, entre les surfaces extérieures du moyeu (9) et les surfaces intérieures de la couronne annulaire extérieure (11), deux sièges annulaires pour lesdits pistons hydrauliques (12, 13), lesdits pistons (12, 13) étant disposés symétriquement entre eux, les surfaces cylindriques extérieures dudit moyeu (9) et desdits pistons (12, 13) possédant des sièges pour des joints annulaires d'étanchéité.

5. Mécanisme d'inversion selon l'une quelconque des revendications précédentes, caractérisé en ce que ladite couronne annulaire extérieure (11) dudit élément (8) en forme de disque possède des trous longitudinaux disposés symétriquement, lesdits trous (16) définissant des sièges pour des vis (17) en vue d'un raccordement auxdits embrayages (18, 19).

6. Mécanisme d'inversion selon l'une quelconque des revendications précédentes, caractérisé en ce que lesdits embrayages (18, 19) sont disposés symétriquement entre eux et comportent un support sensiblement cylindrique (20), perforé axialement intérieurement pour une introduction dudit arbre d'entraînement (7), un siège cylindrique (21) étant prévu dans ledit support (20) pour une série de disques (22) disposés face à face et associés à coulissement un par un à la surface rainurée extérieure (23) dudit siège (21) ou à une couronne rainurée (24) disposée à l'intérieur dudit support (20) et associés à rotation audit arbre d'entraînement (7).

7. Mécanisme d'inversion selon l'une quelconque des revendications précédentes, caractérisé en ce que ladite couronne rainurée (24) de chacun desdits embrayages (18, 19) est reliée à une roue dentée conique (25, 26) pouvant tourner librement sur ledit arbre d'entraînement (7) et couplée à celui-ci à l'aide de paliers à rouleaux (27, 27a, 28, 28a).

8. Mécanisme d'inversion selon l'une quelconque des revendications précédentes, caractérisé en ce que ledit arbre mené (29) supporté sur ledit corps (2) par des paliers est disposé sur l'axe transversal dudit élément (8) en forme de disque au-dessus dudit élément (8), ledit arbre mené (29) étant calé à une roue dentée conique (30) engrenant simultanément avec lesdites roues dentées (25, 26) associées auxdits embrayages du type à plateau (18, 19).

9. Mécanisme d'inversion selon l'une quelconque des revendications précédentes, caractérisé en ce que ledit arbre d'entraînement (7) s'étend avec l'une de ses extrémités libres (31) pour un raccordement à une pompe à huile (32) possédant un refoulement relié à un distributeur, ladite extrémité libre (31) possédant deux évidements annulaires (33, 34) reliés, au moyen de conduits cylindriques (35, 36), audit distributeur.

10. Mécanisme d'inversion selon l'une quelconque des revendications précédentes, caractérisée en ce que chacun desdits évidements annulaires (33, 34) est relié, par l'intermédiaire d'un trou radial (37, 40), à un trou longitudinal prévu sur ledit arbre d'entraînement (7) et un trou transversal (38, 42) qui traverse le moyeu (9), à la couronne d'un desdits pistons (12, 13), sur laquelle est prévue une chambre annulaire aplatie (39, 43).

11. Mécanisme d'inversion selon l'une quelconque des revendications précédentes, caractérisé en ce que ledit arbre d'entraînement (7) est traversé longitudinalement par un autre trou (44) qui, au moyen de trous radiaux, relie tous les paliers et parties du mécanisme d'inversion à lubrifier à l'admission de la pompe à huile (32).

Fig. 1